Europäisches Patentamt

European Patent Office

Office européen des brevets

(11) Publication number : **0 460 402 B1**

# EUROPEAN PATENT SPECIFICATION

(45) Date of publication of patent specification :
**16.06.93 Bulletin 93/24**

(51) Int. Cl.⁵ : **A23F 3/16**

(21) Application number : **91107175.1**

(22) Date of filing : **03.05.91**

(54) Water soluble tea extracts.

(30) Priority : **07.06.90 US 534978**

(43) Date of publication of application :
**11.12.91 Bulletin 91/50**

(45) Publication of the grant of the patent :
**16.06.93 Bulletin 93/24**

(84) Designated Contracting States :
**AT BE CH DE DK ES FR GB GR IT LI LU NL SE**

(56) References cited :
**EP-A- 0 135 222**
**SU-A- 683 709**
**CHEMICAL ABSTRACTS, vol. 76, no. 25, 1972, page 343, abstract no. 152319t, Columbus, Ohio, US ; & JP-A-71 17 958 (H. OHWATA) 19-05-1971**
**CHEMICAL ABSTRACTS, vol. 69, no. 21, 1968, page 7984, abstract no. 85539e, Columbus, Ohio, US ; N. TOYAMA et al.: "Extraction of green tea components from tea leaves using cellulase and a cell-separating enzyme", & HAKKO KOGAKU ZASSHI 1966, 44(11), 830-4**

(56) References cited :
**STN INTERNATIONAL INFORMATION SERVICES, CHEMICAL ABSTRACTS, vol. 70, no. 3, 1968, abstract no. 10516g, Columbus, Ohio, US ; Y. MISAWA et al.: "Use of cellulase preparations in food manufacture. IV. Extraction of green tea components with Aspergillus niger cellulase", & NIPPON SHOKUHIN KOGYO GAKKAI SHI 15(7), 1968, P. 306-309**
**PATENT ABSTRACTS OF JAPAN, vol. 8, no. 122 (C-227), 8th June 1984; & JP-A-59 34 849 (HONEN SEIYU K.K.)**
**CHEMICAL ABSTRACTS, vol. 101, no. 15, October 1984, page 594, abstract no. 129177w, Columbus, Ohio, US ; T.O. REVISHVILI et al.: "Effect of enzyme preparations on the yield of tea abstract", & PRIKL. BIOKHIM. MIKROBIOL. 1984, 20(4), 556-9**

(73) Proprietor : **SOCIETE DES PRODUITS NESTLE S.A.**
**Case postale 353**
**CH-1800 Vevey (CH)**

(72) Inventor : **Lee, Eldon Chen-Hsiung**
**10 High Trail Road**
**New Milford, Connecticut 06776 (US)**

## Description

The present invention relates to the preparation of tea products and more particularly to water soluble tea extracts prepared by acid hydrolysis of the spent tea residues formed during the hot aqueous extraction of tea leaves in the production of water soluble tea extracts.

The products of tea have been increasingly marketed in the form of water-soluble tea extracts, usually in the form of dry powders. Substantial research activity has been directed to improve the quality of tea beverage, having a flavour and colour as close as possible to that obtained by brewing tea leaves. Another aspect of soluble tea manufacturing is to increase the yield of tea soluble solids.

Methods of obtaining tea extracts from tea leaves using a series of countercurrent stages or a two-stage extraction are well-known. Temperatures of aqueous extraction vary from room temperature to elevated temepratures as high as 180°C with elevated pressures.

However, the predominantly remaining spent tea, i.e. tea extraction residue material, is currently discarded.

In US-A-4668525, a method is described for treating the spent tea leaf from a tea extraction process which comprises acidifying the spent tea leaf to reduce the pH to within the range of about 2.0 to 3.0 and subjecting the acidified spent tea leaf to further extraction with aqueous solvent at pressures of about 80-100 psig and temperatures of about 140° - 170°C for at least 4 minutes and separating the remaining tea leaf solids from the aqueous solvent to leave a high temperature/high pressure aqueous extract. However, the resulting extract was found to have an unacceptable bitter taste with a pruny off-flavour.

Chemical Abstracts vol. 70 no. 10516g (1968) and Chemical Abstracts vol. 101 no. 129177w (1984) describe processes for increasing the extraction yield of green tea and waste tea respectively with a cellulase.

Methods have been described for treating raw tea ingredients by means of enzymes in order to obtain water soluble tea extracts. For instance, Japanese Patent No. 71017958 describes the extraction of tea with a protopectinase and cellulase, Japanese Patent No. 82047465 describes the production of cereal teas which comprises heating at 110°-220°C, impregnating with an aqueous solution of amylase, protease or cellulase, heat-drying at 50-100°C and roasting at 100-170°C, and Japanese Patent No. 84034849 describes the production of instant tea by extraction with a mixture of glutinous starch, alpha amylase and at least one enzyme selected from beta amylase, cellulase and protease. EP-A-135222 describes a process of treating black tea before extraction with a solution of tannase and one or more cell wall digesting enzymes such as cellulase.

Russian Patent No. 683709 describes the treatment of tea waste by fermenting with a mixture of pectolytic and cellulolytic enzymes and afterwards adding amino acids and saccharose and extracting at 70° to 90°C.

We have found that by hydrolysing spent tea solids with cellulase, soluble tea solids can be obtained in good yields with a desirable tea flavour and no objectionable off-flavour. preferably without the addition of extraneous materials which would lead to a product which is not 100% tea.

Accordingly the present invention comprises a process for the preparation of a water-soluble tea extract from spent tea residues formed during the hot aqueous extraction of tea leaves in the production of water-soluble tea extracts which comprises hydrolysing the separated spent tea residues with cellulase in an aqueous medium, and then separating insoluble residue from the extract, said hydrolysing step excluding the addition of enzymes other than cellulase.

The water-soluble tea extracts may be obtained by conventional methods by the hot aqueous extraction of black or green tea leaves, for instance, using a series of countercurrent stages or a two-stage extraction. Temperatures of the aqueous extraction may vary from room temperature to up to 180°C or more with elevated pressures.

The spent tea residues used for the hydrolysis may be wet or dehydrated and advantageously ground, for instance, to an average particle size of from 0.05 to 2.0 millimetres.

The hydrolysis with the cellulase may be carried out by incubating the spent tea residue in an aqueous medium at a temperature and pH suitable for cellulase hydrolysis. The temperature may be from 30°-65°C and preferably from 40° to 55°C. The pH may be from 3 to 7 and preferably from 4.0 to 6.0.

The duration of the hydrolysis may vary widely, for instance up to 1 week, but conveniently the hydrolysis is carried out over a period of from 2 to 48 hours, preferably from 4 to 36 hours and especially from 8 to 30 hours.

The amount of spent tea residue in the aqueous medium may be from 2% to 40% and preferably from 10% to 25% by weight based on the weight of the water. The amount of cellulase may be from 0.02% to 2.0% and preferably from 0.1% to 0.2% by weight based on the weight of the water. The amount of cellulase is conveniently from 0.1 to 10% and preferably from 0.5% to 1.5% by weight based on the weight of spent tea residue.

The incubation mixture is preferably well agitated, for instance, by stirring vigorously.

The cellulase enzyme may be obtained from any source and one convenient source is Celluclast (Novo Enzymes) which is a cellulase preparation made by submerged fermentation of a selected strain of the fungus, Trichoderma reesei. Other sources of cellulase are Amano Cellulase derived from T.viride (Amano International Enzyme Co.), Genencor Cytolase 123 derived from T.reesei (Genencor Inc) and Biocon Biocellulase (a Registered Trade Mark, Biocon USA Inc.). After cellulase hydrolysis this mixture is preferably heated to deactivate the enzyme activity.

Optionally, the cellulase treated spent tea grounds may be further hydrolysed with a protease, for example a bacterial protease or a fungal protease in an aqueous medium. The protease hydrolysis may be carried out over a period up to 48 hours, preferably from 12 to 36 hours. The temperature of the protease hydrolysis may be from 30° to 65°C and preferably from 45° to 55°C. The pH of the protease hydrolysis may be from 4 to 8.5 depending on the protease used. The amount of protease used may be from 0.025 to 5% and preferably from 0.05 to 2% by weight based on the weight of the cellulase treated spent tea residue. After protease hydrolysis the mixture is preferably heated to deactivate the protease.

The soluble hydrolysed spent tea residue may then be separated from the insoluble residue, conveniently by filtration and if desired, concentrated. The separated soluble hydrolysed spent tea residue may be mixed with conventional tea extract, nature tea essence or enhancer and spray dried to a moisture content of below 5%, preferably below 4% by weight.

The following Examples further illustrate the present invention.

Example 1

Spent tea residues formed during the hot aqueous extraction of black tea leaves in the production of water-soluble tea extracts were dehydrated to a moisture content of 5.49% and then ground through No 16 mesh 1.18 mm sieve using a Reitz mill. 240 g of the tea residue grounds were added to 1600 ml water and incubated in a reactor with good agitation at 50°C and a pH of 5.23 with 2.4 g of Celluclast 1.5 L (Novo Enzymes) having an activity of 1500 NCU/g. Samples were taken after 10 hours and 24 hours hydrolysis and each sample was heated at 95°C for 20 minutes to inactivate the enzyme activity, cooled, filtered and washed with deionised water. The insoluble residue was dried in a vacuum oven at 70°C overnight to a constant weight, the filtrate was evaporated over a water bath and dried in a vacuum at 70°C overnight to a constant weight and the yields of soluble and insoluble matter were determined. The HPLC analysis of the tea residue Celluclast hydrolysate shows in Table I below that the hydrolysis products are mainly glucose, cellobiose and higher glucose polymers.

## TABLE I

| Composition | % Yield/Tea Residue Solids | |
| --- | --- | --- |
| | 10 hours hydrolysis | 24 hours hydrolysis |
| Glucose | 3.8 | 4.6 |
| Cellobiose | 3.7 | 4.8 |
| Higher Glucose Polymers (by difference) | 10.3 | 10.6 |
| Total Soluble Matter | 17.8 | 20.0 |

The cellulase hydrolysate of tea residue showed a slight tea flavour and an overall blend taste with no objectionable off-flavour.

Example 2

The filtrate of 17.8% yield formed by the process of Example 1 after 10 hours hydrolysis was concentrated to 40-45% solids using a rotary evaporator at 50°C. 12 parts of this concentrate were blended 85 parts of aqueous tea extracts having a solids content of 40-45% and 3 parts of 3-fold tea essence and spray dried to a moisture content below 4%.

0.20% parts of this spray dried product were formulated with 7 parts of sugar and 0.125 parts of citric acid and made up to 100 parts with water. This compounded tea sample had a good tea flavour with no off-flavour.

Examples 3 and 4

150 g of the dehydrated cellulase pre-treated spent tea residues formed by the process of Example 1 were added to 1 litre of water and incubated with good agitation at 50°C for 24 hours at a pH shown in Table II adjusted with IN sodium hydroxide, with 1.5 g of the bacterial or fungal protease also shown in Table II. The mixture was then heated to 95°C for 30 minutes to inactivate the enzyme, and filtered to determine the soluble and insoluble components which are shown in Table II.

## TABLE II

| Protease | PH | Based on cellulase pretreated tea residue | |
|---|---|---|---|
| | | Insoluble components % | Soluble components % |
| Bacterial protease (Miles HT - Proteolytic 200) | 7.0 | 94.3 | 5.7 |
| Fungal protease (Miles Fungal Protease 60,000) | 5.0 | 94.8 | 5.2 |

**Claims**

1. A process for the preparation of a water-soluble tea extract from spent tea residues formed during the hot aqueous extraction of tea leaves in the production of water-soluble tea extracts which comprises hydrolysing the separated spent tea residues with cellulase in an aqueous medium, and then separating insoluble residue from the extract, said hydrolysing step excluding the addition of enzymes other than cellulase.

2. A process according to claim 1 wherein the temperature of the hydrolysis is from 30° to 65°C.

3. A process according to claim 1 wherein the pH of the hydrolysis is from 3 to 7.

4. A process according to claim 1 wherein the duration of the hydrolysis is from 2 to 48 hours.

5. A process according to claim 1 wherein the amount of spent tea residue in the aqueous medium is from 5% to 40% by weight based on the weight of water.

6. A process according to claim 1 wherein the amount of cellulase in the aqueous medium is from 0.05% to 1.0% by weight based on the weight of the water.

7. A process according to claim 1 wherein the spent tea residues hydrolysed with cellulase are further hydrolysed with a protease.

8. A process according to claim 1 wherein the soluble hydrolysed spent tea residues are mixed with conventional tea extract, nature tea essence or enhancer and spray dried to a moisture content below 5%.

**Patentansprüche**

1. Verfahren zur Herstellung eines wasserlöslichen Tee-Extraktes aus verbrauchten Teerückständen, welche während der Heißwasserextraktion von Teeblättern bei der Erzeugung von wasserlöslichen Tee-Extrakten gebildet worden sind, welches Verfahren das Hydrolysieren der abgetrennten verbrauchten Teerückstände mit Zellulase in einem wässerigen Medium und dann das Abtrennen des unlöslichen Rückstandes von dem Extrakt umfaßt, wobei diese Hydrolysenstufe die Zugabe anderer Enzyme als Zellulase ausschließt.

2. Verfahren nach Anspruch 1, wobei die Temperatur der Hydrolyse 30 bis 65°C beträgt.

3. Verfahren nach Anspruch 1, wobei der pH-Wert der Hydrolyse 3 bis 7 ausmacht.

4. Verfahren nach Anspruch 1, wobei die Dauer der Hydrolyse 2 bis 48 Stunden ausmacht.

5. Verfahren nach Anspruch 1, wobei die Menge des verbrauchten Teerückstandes in dem wässerigen Medium 5 Gew.-% bis 40 Gew.-%, bezogen auf das Gewicht des Wassers, ausmacht.

6. Verfahren nach Anspruch 1, wobei die Menge der Zellulase in dem wässerigen Medium 0,05 Gew.-% bis 1,0 Gew.-%, bezogen auf das Gewicht des Wassers, ausmacht.

7. Verfahren nach Anspruch 1, wobei die mit Zellulase hydrolysierten, verbrauchten Teerückstände weiterhin mit einer Protease hydrolysiert werden.

8. Verfahren nach Anspruch 1, wobei die löslichen, hydrolysierten verbrauchten Teerückstände mit herkömmlichem Tee-Extrakt, natürlicher Tee-Essenz oder natürlichem Tee-Verstärker vermischt und auf einen Feuchtigkeitsgehalt unter 5 % sprühgetrocknet werden.

**Revendications**

1. Procédé de préparation d'un extrait de thé soluble dans l'eau à partir de résidus de thé épuisés formés au cours de l'extraction aqueuse à chaud de feuilles de thé dans la production d'extraits de thé solubles dans l'eau, qui comprend l'hydrolyse des résidus de thé épuisés séparés avec une cellulase dans un milieu aqueux, puis la séparation du résidu insoluble de l'extrait, ladite étape d'hydrolyse excluant l'addition d'enzymes autres qu'une cellulase.

2. Procédé suivant la revendication 1, dans lequel la température de l'hydrolyse est comprise dans l'intervalle de 30° à 65°C.

3. Procédé suivant la revendication 1, dans lequel le pH de l'hydrolyse est compris dans l'intervalle de 3 à 7.

4. Procédé suivant la revendication 1, dans lequel la durée de l'hydrolyse est comprise dans l'intervalle de 2 à 48 heures.

5. Procédé suivant la revendication 1, dans lequel la quantité de résidus de thé épuisés dans le milieu aqueux est comprise dans l'intervalle de 5 % à 40 % en poids, sur la base du poids de l'eau.

6. Procédé suivant la revendication 1, dans lequel la quantité de cellulase dans le milieu aqueux est comprise dans l'intervalle de 0,05 % à 1,0 % en poids, sur la base du poids de l'eau.

7. Procédé suivant la revendication 1, dans lequel les résidus de thé épuisés hydrolysés avec une cellulase sont en outre hydrolysés avec une protéase.

8. Procédé suivant la revendication 1, dans lequel les résidus de thé épuisés hydrolysés solubles sont mélangés à un extrait de thé classique, de l'essence naturelle de thé ou un renforçateur et sont séchés par pulvérisation à une teneur en humidité inférieure à 5 %.